# EUROPÄISCHE PATENTSCHRIFT

(11) **EP 1 575 795 B1**
(45) Veröffentlichungstag und Bekanntmachung des Hinweises auf die Patenterteilung: **28.02.2007**
(21) Anmeldenummer: 03813112.4
(22) Anmeldetag: 09.12.2003
(51) Int. Cl.: B60J 5/04, B62D 27/06

(54) **VERFAHREN ZUR HERSTELLUNG EINER TÜR EINES KRAFTFAHRZEUGS SOWIE EINE NACH DIESEM VERFAHREN HERGESTELLTE TÜR**
METHOD FOR THE PRODUCTION OF THE DOOR OF A MOTOR VEHICLE AND A DOOR MADE BY SAID METHOD
PROCEDE POUR PRODUIRE UNE PORTIERE DE VEHICULE AUTOMOBILE ET PORTIERE PRODUITE SELON LEDIT PROCEDE

(30) Priorität: 18.12.2002 DE 10259630
(43) Veröffentlichungstag der Anmeldung: 21.09.2005
(73) Patentinhaber: Volkswagen Aktiengesellschaft, 38436 Wolfsburg (DE)
(72) Erfinder: HOFFMANN, Andrea, 38106 Braunschweig (DE); DÖHLER, Wolfgang, 38446 Wolfsburg (DE); JACOB, Henning, 29386 Hankensbüttel (DE); BRÄMER, Andreas, 38165 Lehre (DE); RODERMUND, Wilfried, 38461 Danndorf (DE)
(74) Vertreter: Basfeld, Rainer
(86) Internationale Anmeldenummer: PCT/EP2003/013934
(87) Internationale Veröffentlichungsnummer: WO 2004/054831

(56) Entgegenhaltungen:
- EP-A- 1 215 065
- DE-A- 10 061 642
- DE-A- 10 106 433
- DE-A- 19 946 307

## Beschreibung

Die vorliegende Erfindung betrifft ein Verfahren zur Herstellung einer Tür eines Kraftfahrzeugs gemäß dem Oberbegriff des Anspruchs 1. Weiterhin betrifft die vorliegende Erfindung eine nach diesem Verfahren hergestellte Tür und das dazugehörige Kraftfahrzeug.

Ein Verfahren sowie eine Tür der vorgenannten Art sind aus der DE 199 46 307 A bekannt. Bei dem darin beschriebenen Verfahren wird das Außenteil der Tür über ein aus einem Versteifungselement und einem Distanzelement bestehendes Verbindungsmittel mit dem Innenteil verbunden. Dabei wird das Verbindungsmittel mit Außen- und Innenteil verklebt und zusätzlich mit dem Innenteil verschraubt. Zum Lösen der Verbindung zwischen Innenteil und Außenteil muss neben dem Lösen der Schraubverbindung auch die Klebeverbindung zwischen Verbindungsmittel und Innenteil durchtrennt werden.

Ein weiteres Verfahren zur Herstellung einer Tür eines Kraftfahrzeugs ist aus der europäischen Patentanmeldung EP 1 215 065 A2 bekannt. Bei dem darin beschriebenen Verfahren wird das in der Regel als Innenblech ausgeführte Innenteil vor dem Verbinden mit dem in der Regel als Außenblech ausgeführten Außenteil mit mindestens einem Bauteil, das eine funktionale Komponente darstellt, verbunden. Eine derartige funktionale Komponente kann ein Türschloss, ein Fensterheber oder ein Lautsprecher sein. Weiterhin wird bei einem derartigen Verfahren vor der Verbindung von Innen- und Außenteil das Außenteil lackiert. Daran anschließend schlägt die vorgenannte Offenlegungsschrift vor, entweder Außenteil und Innenteil mit lösbaren Befestigungselementen miteinander zu verbinden, oder Außenteil und Innenteil miteinander zu verkleben. Die Verbindung von Außenteil und Innenteil mittels lösbaren Befestigungselementen wie Schrauben, Nieten oder dergleichen weist den Nachteil auf, dass während der Verbindung von Außenteil und Innenteil Einzelteiltoleranzen der miteinander zu verbindenden Teile nur sehr schwer ausgeglichen werden können. Das Verkleben von Außenteil und Innenteil ermöglicht zwar während der Verbindung von Außenteil und Innenteil den Ausgleich von Einzelteiltoleranzen, verhindert aber andererseits ein zerstörungsfreies Auseinandernehmen der fertigen Tür, wenn eines der funktionalen Bauteile im Reparaturfall ausgetauscht werden soll.

Aus der deutschen Offenlegungsschrift DE 101 06 433 A1 ist ebenfalls ein Verfahren der eingangs genannten Art bekannt. Bei diesem Verfahren wird ebenfalls das Innenteil vor der Verbindung mit dem Außenteil mit Bauteilen bestückt und wird ebenfalls das Außenteil vor der Verbindung mit dem Innenteil separat lackiert. Daran anschließend wird zuerst das Innenteil an der Karosserie angebracht und daran anschließend das Außenteil auf das Innenteil geklebt. Durch dieses Verfahren lassen sich Einzelteilfertigungstoleranzen ausgleichen. Als nachteilig erweist sich hier aber ebenfalls, dass im Reparaturfall Außenteil und Innenteil nicht ohne Beschädigungen oder aber nur mittels sehr großem Aufwand beschädigungslos voneinander lösbar sind.

Das der vorliegenden Erfindung zugrunde liegende Problem ist die Schaffung eines Verfahrens der eingangs genannten Art, mittels dem Einzelteiltoleranzen während der Verbindung von Außenteil und Innenteil ausgeglichen werden können und das gleichzeitig im Reparaturfall ein einfaches Lösen von Außenteil und Innenteil ermöglicht.

Die Lösung dieser Aufgabe liefert ein erfindungsgemäßes Verfahren zur Herstellung einer Tür eines Kraftfahrzeugs der eingangs genannten Gattung mit den kennzeichnenden Merkmalen des Hauptanspruchs. Erfindungsgemäß ist vorgesehen, dass die Verbindung zwischen Innenteil und Verbindungsmittel über das mindestens eine Befestigungselement derart ausgebildet ist, dass durch Lösen dieser Verbindung Außenteil und Innenteil problemlos zerstörungsfrei voneinander lösbar sind.

Eine Weiterbildung des erfindungsgemäßen Verfahrens sieht vor, dass vorzugsweise das mindestens eine Befestigungselement zur Verbindung des Innenteils mit dem Verbindungsmittel das mindestens eine Verbindungsmittel und das Innenteil zumindest teilweise durchdringt.

Durch die Verwendung eines separaten Verbindungsmittels können die aus dem Stand der Technik bekannten Probleme gelöst werden. Zum einen können Verbindungsmittel und Innenteil miteinander über die vorgenannten Befestigungselemente, die erfindungsgemäß insbesondere als Schraube, Niet, Bolzen, Splint oder Spreizelement ausgeführt sein können, verbunden werden. Daran anschließend kann während der Verbindung von Außen- und Innenteil das Außenteil mit dem Verbindungsmittel verklebt werden. Durch das Verkleben können Einzelteiltoleranzen problemlos während der Verbindung von Innenteil und Außenteil ausgeglichen werden. Trotzdem können im Reparaturfall durch Lösen der beispielsweise Schraubverbindung zwischen Innenteil und Verbindungsmittel Außenteil und Innenteil problemlos zerstörungsfrei voneinander gelöst werden. Insbesondere können sie einfach auseinadergeschraubt und nach Durchführung der Reparatur wieder miteinander verschraubt werden.

Erfindungsgemäß besteht die Möglichkeit, dass während der Verklebung der Verbindungsmittels mit dem Außenteil das Innenteil mit dem Außenteil über mindestens ein zusätzliches Befestigungselement direkt verbunden wird. Dieses zusätzliche Befestigungselement kann vorzugsweise ebenfalls als Schraube, Niet, Bolzen, Splint oder Spreizelement ausgeführt sein. Dieses mindestens eine zusätzliche Befestigungselement lässt sich somit im Reparaturfall ebenfalls einfach lösen, ohne das dabei Innen- oder Außenteil beschädigt werden. Durch dieses beispielsweise zusätzliche Verschrauben von Außenteil und Innenteil wird die Festigkeit der Verbindung von Innenteil und Außenteil erhöht. Weiterhin kann die Zeit, während der die Klebeverbindung zwischen Verbindungsmittel und dem Außenteil aushärten muss, für das zusätzliche beispielsweise Verschrauben von Innenteil und Außenteil genutzt werden. Insbesondere können Innenteil und Außenteil zuerst bei aneinander gepressten Klebeflächen derart gegeneinander verschoben werden, dass Einzelteilfertigungstoleranzen ausgeglichen werden. Daran anschließend können innerhalb einer vorgebbaren Zeit die Verklebung oder die Verklebungen aushärten, während gleichzeitig die beispielsweise zusätzlichen Schrauben das Innenteil und das Außenteil zusätzlich aneinander festlegen können.

Wie bei dem vorgenannten Stand der Technik besteht auch erfindungsgemäß die Möglichkeit, dass das Innenteil vor der Verbindung mit dem Außenteil mit mindestens einem Bauteil, insbesondere mit einem Fensterheber und/oder einem Türöffner und/oder einem Lautsprecher versehen wird. Weiterhin besteht die Möglichkeit, dass das Außenteil vor der Verbindung mit dem Innenteil auf seiner Außenseite mit einer Farblackierung und insbesondere mit einer die Farblackierung abdeckenden Schutzfolie versehen wird.

Gemäß einer bevorzugten Ausführungsform ist das mindestens eine Verbindungsmittel als Leiste ausgeführt. Eine Leiste ist zum einen vergleichsweise flach, so dass sie problemlos zwischen Außenteil und Innenteil untergebracht werden kann. Zum anderen weist sie große als Verbindungsflächen dienende Kontaktflächen auf. Es besteht erfindungsgemäß die Möglichkeit, dass das mindestens eine Verbindungsmittel aus Kunststoff und/oder Metall besteht, insbesondere als aus Kunststoff und Metall bestehende Hybridleiste ausgeführt ist. Insbesondere können hierbei die stärker kraftbeanspruchten Teile des Verbindungsmittels aus Metall ausgeführt sein, wohingegen beispielsweise äußere Anformungen, auf die Abdeckleisten oder dergleichen aufklipsbar sind, aus Kunststoff bestehen können.

Vorzugsweise weist das mindestens eine Verbindungsmittel auf seiner im verbundenen Zustand der Tür dem Außenteil zugewandten Seite mindestens eine Klebeauftragsfläche auf. Bei einem als Leiste ausgeführten Verbindungsmittel kann sich die Klebeauftragsfläche über große Teile, insbesondere über die gesamte Länge der Leiste erstrecken. Dadurch wird eine vergleichsweise gute Verbindung zwischen Verbindungsmittel und Außenteil gewährleistet.

Wie oben ausgeführt wurde, kann als Verbindungsmittel beispielsweise eine Leiste verwendet werden. Eine solche Leiste hat vorzugsweise mindestens abschnittsweise einen einem U-Profil und/oder einem Hutprofil ähnlichen Querschnitt. Vorzugsweise weist eine solche Leiste, die als Verbindungsmittel im Sinne der Erfindung dient, mindestens eine Verkröpfung auf. Dadurch ergeben sich mindestens zwei im Wesentlichen zueinander parallele Ebenen, wobei die erste Ebene mindestens teilweise an dem mit dem Verbindungsmittel zu verbindenden Innenteil zur Anlage kommen kann und die zweite Ebene beispielsweise mit dem Außenteil verklebt werden kann.

Eine mögliche bevorzugte Variante der Erfindung sieht vor, dass das Verbindungsmittel zunächst mit dem unlackierten Innenteil verbunden wird und danach gemeinsam mit diesem Innenteil wenigstens eine Beschichtung und/oder Lackierung erhält. Danach wird diese Anordnung dann insbesondere durch Verklebung mit dem Außenteil verbunden. Man kann auf diese Weise das mit dem zunächst unlackierten Innenteil verbundene Verbindungsmittel gegebenenfalls zusammen mit der Karosserie des Kraftfahrzeugs beschichten, beispielsweise mit einer KTL-Beschichtung und/oder lackieren. Danach liegt das Verbindungsmittel ebenso wie das Innenteil beispielsweise in der Farbe vor, die für das Fahrzeug vorgesehen ist. Die Verwendung einer Abdeckleiste oder dergleichen kann bei dieser Variante des erfindungsgemäßen Verfahrens entfallen. Um die Optik weiter zu verbessern, kann man beispielsweise in dem Bereich, in dem Innenteil und Außenteil aneinandergrenzen einen dort vorhandenen Spalt mindestens teilweise durch eine Feinabdichtungsnaht ausfüllen.

Gegenstand der Erfindung ist weiterhin eine Tür eines Kraftfahrzeugs, die nach einem Verfahren mit den Merkmalen eines der Ansprüche 1 bis 15 hergestellt wurde. Weiterhin ist Gegenstand der Erfindung ein Kraftfahrzeug, welches mindestens eine nach diesem Verfahren hergestellte Tür umfasst.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a - h: eine schematische Darstellung eines erfindungsgemäßen Verfahrens;
- Fig. 2a: eine Ansicht gemäß den Pfeilen IIa - IIa in Fig. 2b;
- Fig. 2b: eine Draufsicht auf eine Aufnahmevorrichtung mit darauf aufgelegtem Außenteil und Innenteil;
- Fig. 3: eine perspektivische Außenansicht eines Innenteils vor der Verbindung mit einem Außenteil;
- Fig. 4: einen vergrößerten Ausschnitt von Fig. 3;
- Fig. 5: eine um ein Außenteil und eine Abdeckleiste ergänzte Schnittansicht gemäß den Pfeilen V - V in Fig. 4;
- Fig. 6: eine ähnliche Schnittansicht wie in Fig. 5, wobei eine alternative Variante des zuvor beschriebenen Ausführungsbeispiels gezeigt ist.

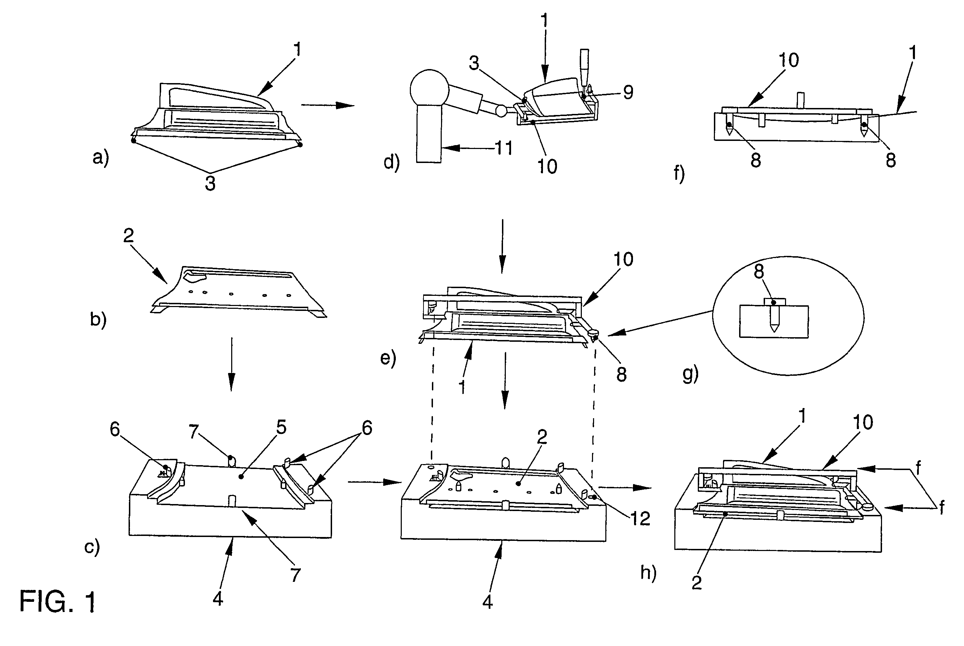

Aus Fig. 1 ist schematisch ein erfindungsgemäßes Verfahren zur Herstellung einer Tür eines Kraftfahrzeugs ersichtlich. Die erfindungsgemäße Tür wird im wesentlichen aus zwei Teilen zusammengesetzt, nämlich einem Innenteil 1 und einem Außenteil 2. Sowohl das Innenteil 1 als auch das Außenteil 2 sind im wesentlichen als Innenblech bzw. als Außenblech ausgeführt.

in Fig. 1a bis Fig. 1c sind Innenteil 1 und Außenteil 2 noch voneinander separiert. An dem Innenteil 1 können bereits Bauteile wie Türschlösser, Fensterheber oder Lautsprecher montiert sein. Weiterhin ist an dem Innenteil 1 bereits ein insbesondere als Hybridleiste ausgeführtes Verbindungsmittel 3 angebracht, insbesondere angeschraubt, das im nachfolgenden näher beschrieben wird. In Fig. 1a sind die als Hybridleisten ausgeführten Verbindungsmittel 3 schematisch angedeutet.

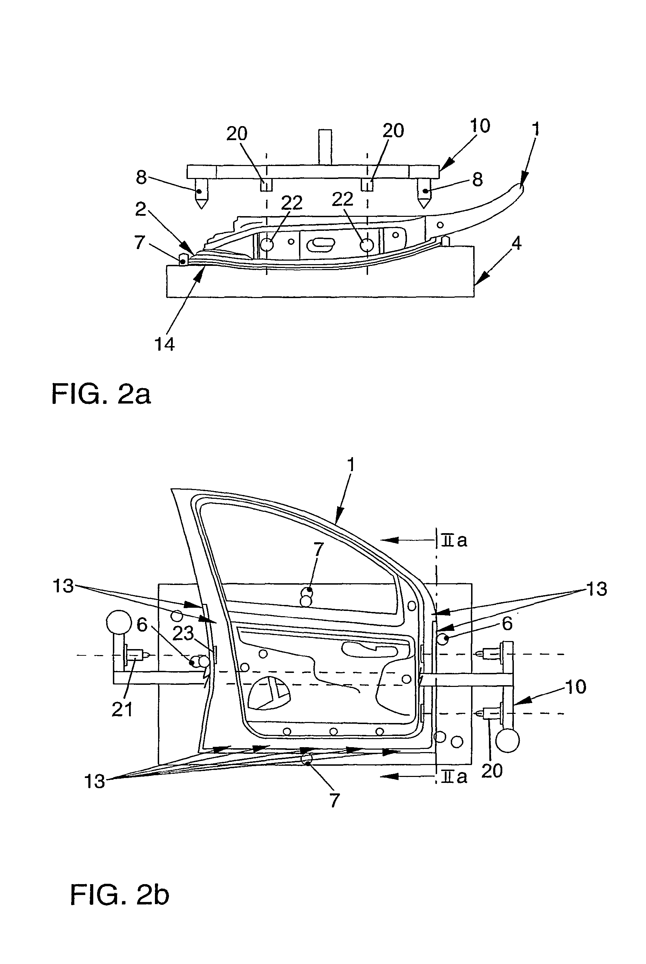

Das Außenteil 2 kann auf seiner Außenseite bereits mit einer Farblackierung versehen sein. Diese Farblackierung kann mit einer Schutzfolie 14 abgedeckt sein (siehe auch Fig. 2a). Das Außenteil 2 wird mit seiner Außenseite in eine Aufnahmevorrichtung 4 eingelegt, die auf ihrer Oberseite eine geformte Aufnahmefläche 5 für die im wesentlichen passgenaue Anlage bzw. Auflage des Außenteils 2 aufweist (siehe dazu Fig. 1 b und Fig. 1 c).

Für die genaue Positionierung des Außenteils 2 an der Aufnahmevorrichtung 4 sind an dieser aus der Aufnahmevorrichtung 4 nach oben in Fig. 1 c herausragende X-Anschläge 6 und Z-Anschläge 7 vorgesehen. Die X-Richtung ist hierbei die Fahrzeuglängsrichtung, die Y-Richtung ist die Fahrzeugquerrichtung und die Z-Richtung ist die vertikale Richtung des Fahrzeugs. Die Anschläge 6, 7 wirken mit entsprechenden Öffnungen, Ausnehmungen oder äußeren Begrenzungen des Außenteils 2 derart zusammen, dass eine vorgegebene Positionierung des Außenteils 2 in X- und Z-Richtung auf der Aufnahmevorrichtung 4 gewährleistet werden kann. Die Positionierung des Außenteils 2 in Y-Richtung erfolgt durch die Auflage des Außenteils 2 auf die geformte Aufnahmefläche 5, wobei das Außenteil 2 in Y-Richtung auf Anschlag auf die Aufnahmefläche 5 aufgebracht wird.

In Fig. 1d ist dargestellt, dass auf das vormontierte Innenteil 1, und dabei insbesondere auf die als Hybridleisten ausgeführten Verbindungsmittel 3 Klebstoff, insbesondere in Form von Klebstoffraupen 9 aufgetragen wird. Das Innenteil 1 kann dazu in eine Halterung 10 eingebracht werden, die von einem Positionierroboter 11 gehalten wird oder die Teil dieses Positionierroboters 11 ist.

Das Innenteil 1 kann in der Halterung 10 ebenfalls genau positioniert werden. Dazu sind an der Halterung 10 sich in X-Richtung erstreckende als Greifmittel dienende Bolzen 20, 21 angeordnet (siehe dazu Fig. 2a und Fig. 2b). Die in Fig. 2b auf der rechten Seite angeordneten Bolzen 20 können in an dem Innenteil 1 angeordnete Löcher 22 im Bereich der Scharniere eingreifen. Der auf der gegenüberliegenden Seite an dem Halteteil 10 angebrachte Bolzen 21 kann in ein Loch 23 im Bereich des Schlosses der Tür eingreifen. Durch den Eingriff der Bolzen 20, 21 in die Löcher 22, 23 wird das Innenteil in Y- und Z-Richtung positioniert. Die Positionierung in X-Richtung erfolgt über die Einbringung der Bolzen 20, 21 in die Löcher 22, 23 auf Anschlag. Beispielsweise können Teile der Bolzen 20 an den Scharnieranschraubflächen des Innenteils 1 anliegen.

In einem sich an das Aufbringen des Klebstoffs anschließenden Verfahrensschritt (siehe Fig. 1e) wird das Innenteil 1 mit der Halterung 10 auf die Aufnahmevorrichtung 4 und damit auf das Außenteil 2 aufgebracht. An der Halterung 10 sind als Y-Anschläge dienende Bolzen 8 angeordnet, die in entsprechende Aufnahmen 12 an der Aufnahmevorrichtung 4 eingreifen. Fig. 1g gibt diesen Anschlag in Y-Richtung noch einmal detailliert wieder. Das Innenteil 1 wird über den Positionierroboter 11 bzw. die Halterung 10 in X-, Y- und Z-Richtung definiert aufgenommen. Durch die Fügung von Innenteil 1 zu Außenteil 2 auf Anschlag in Y-Richtung über die als Y-Anschlag dienenden Bolzen 8 werden Innenteil 1 und Außenteil 2 sowohl in Y-Richtung als auch in X- und Z-Richtung exakt zueinander positioniert. Durch diese exakte Ausrichtung von Innenteil 1 und Außenteil 2 in X-, Y- und Z-Richtung zueinander wird die fugenbestimmende Kontur der erfindungsgemäßen Tür hergestellt. Eventuell vorhandene Einzelteiltoleranzen in Y-Richtung und zum Teil auch in X- und Z-Richtung können dabei ausgeglichen werden. Insbesondere ist das Außenteil 2 parallel zu den Klebeflächen, d. h. in X- und Z-Richtung, zum Innenteil 1 verschiebbar. Eventuell in Y-Richtung vorhandene Toleranzen können über die Dicke der Klebstoffraupen 9 ausgeglichen werden.

In Fig. 1h ist eine perspektivische Ansicht eines vermittels der Halterung 10 auf das Außenteil 2 aufgepressten Innenteils 1 ersichtlich. Fig. 1f zeigt diesen Vorgang in der Seitenansicht. Durch den Positionierroboter 11 wird dabei das Innenteil 1 eine Zeit lang, beispielsweise mindestens acht bis zehn Sekunden, auf das Außenteil gedrückt, um ein zumindest teilweises Aushärten des Klebstoffs zu ermöglichen. Während dieser Verspannung von Innenteil 1 zu Außenteil 2 werden Innenteil 1 und Außenteil 2 durch Innenteil 1 und Außenteil 2 zumindest teilweise durchdringende Befestigungselemente 13, die insbesondere als Schrauben ausgeführt sind, zusätzlich miteinander verbunden. Die Position der als insbesondere Schrauben ausgeführten Befestigungselemente 13 ist in Fig. 2b deutlich ersichtlich.

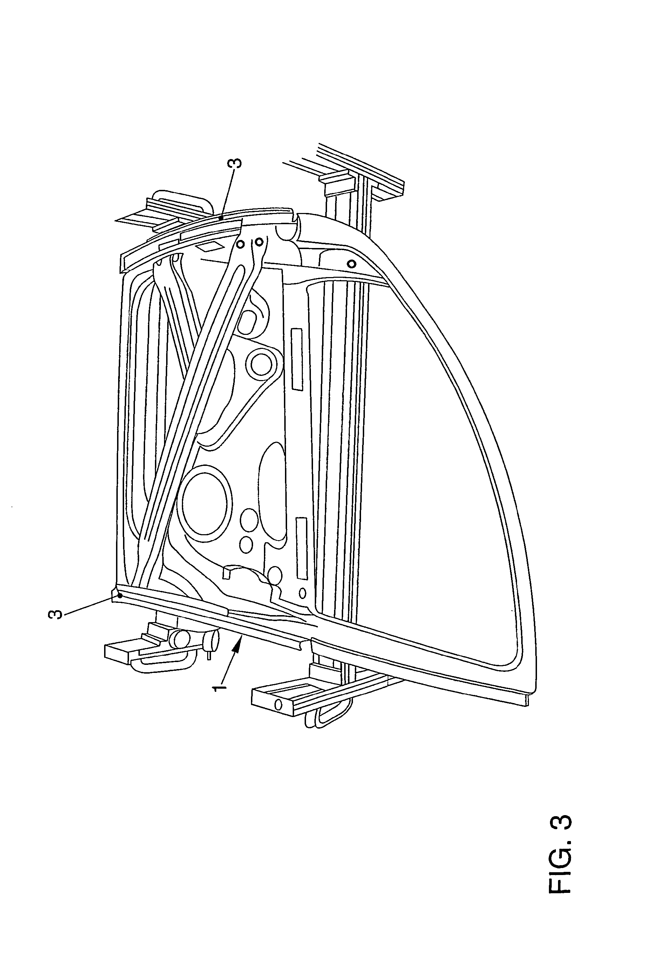

Aus Fig. 3 bis Fig. 5 ist noch einmal deutlich die Anbringung der als Hybridleisten ausgeführten Verbindungsmittel 3 an dem Innenteil 1 ersichtlich. Insbesondere Fig. 3 zeigt, dass die Verbindungsmittel 3 sich in vertikaler Richtung, d. h. in Y-Richtung, im wesentlichen über die gesamte Höhe der eigentlichen Türfläche erstrecken, d. h. etwa bis zu der Höhe, die der Unterkante der Fensteröffnung entspricht.

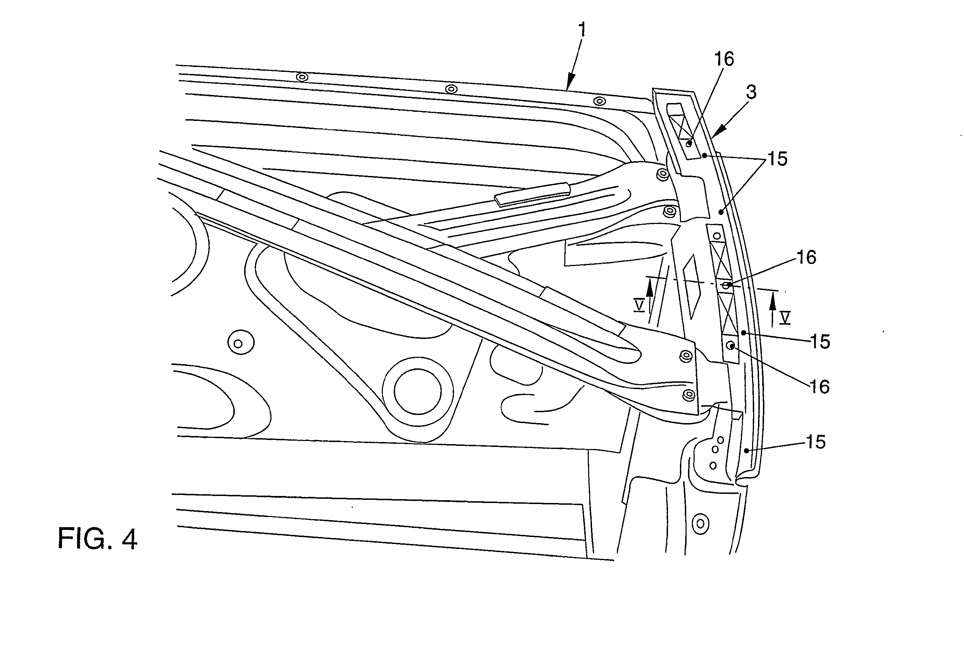

Aus Fig. 4 ist das Verbindungsmittel 3 noch einmal detailliert ersichtlich. Insbesondere sind in Fig. 4 sich in Y-Richtung erstreckende glatte Klebeauftragsflächen 15 ersichtlich, die auf der von dem Innenteil 1 abgewandten Oberfläche des Verbindungsmittels 3 ausgebildet sind. Weiterhin sind Fig. 4 als Schrauben ausgebildete Befestigungselemente 16 entnehmbar, mittels denen die Verbindungsmittel 3 an dem Innenteil 1 angebracht sind.

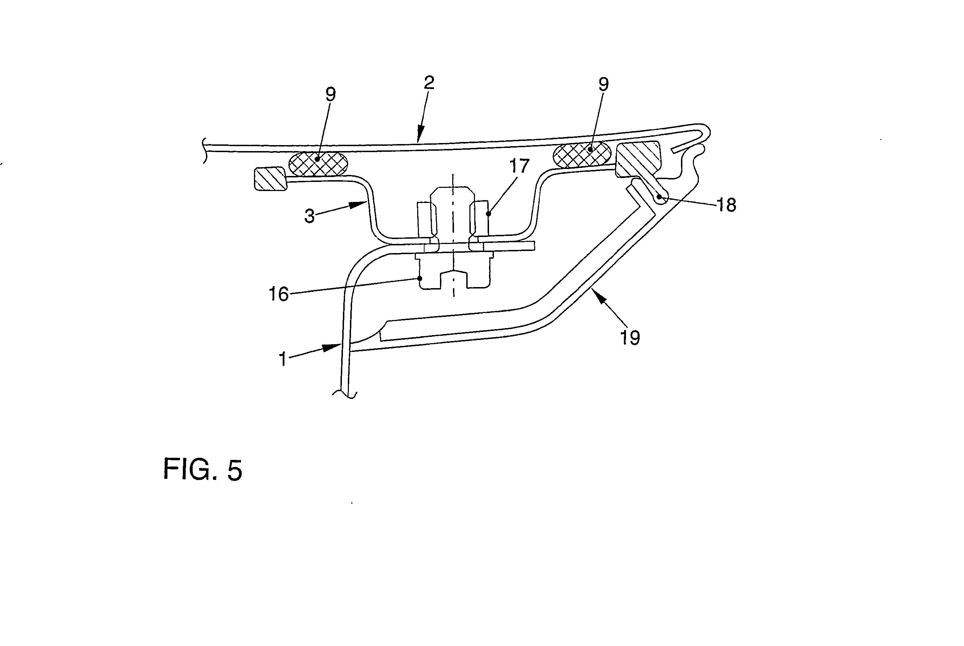

Diese Anbringung ist insbesondere aus der Schnittansicht gemäß Fig. 5 noch einmal deutlich ersichtlich. Fig. 5 kann man entnehmen, dass das Verbindungsmittel 3 einen U-profilähnlichen Querschnitt mit oben umgebogenen Rändern und somit einen hutprofilähnlichen Querschnitt aufweist. Im Bereich des Bodens des Hutprofils ist eine Bohrung für den Hindurchtritt des als Schraube ausgebildeten Befestigungselements 16 angeordnet. Im abgebildeten Ausführungsbeispiel ist auf der von dem Innenteil 1 abgewandten Seite des Verbindungsmittels 3 beispielsweise eine Vierkantmutter 17 angeschweißt, die als Aufnahme für die Schraube dient.

Das Verbindungsmittel 3 ist als Hybridleiste ausgeführt. Dabei sind die in Fig. 5 schraffierten Teile des Verbindungsmittels 3 Kunststoffformteile, die an den im wesentlichen aus Metall bestehenden Körper des Verbindungsmittels 3 angespritzt sind. Insbesondere das in Fig. 5 rechte Kunststoffformteil des Verbindungsmittels 3 weist eine Anformung 18 auf, die in eine entsprechende Aufnahme einer Abdeckleiste 19 eingreifen kann. Die Abdeckleiste 19 kann für den Benutzer nach außen den Verbindungsbereich zwischen Außenteil 2, Verbindungsmittel 3 und lnnenteil 1 optisch ansprechend kaschieren.

Es besteht erfindungsgemäß durchaus die Möglichkeit, das Verbindungsmittel 3 nicht als Hybridleiste aus Kunststoff und Metall sondern als beispielsweise Leiste aus Metall oder Leiste aus Kunststoff oder dergleichen auszuführen.

Anstelle einer Schraube können als Befestigungselemente 13, 16 auch andere Befestigungselemente wie Niete, Bolzen, Splinte oder zur Verbindung geeignete Spreizelemente gewählt werden.

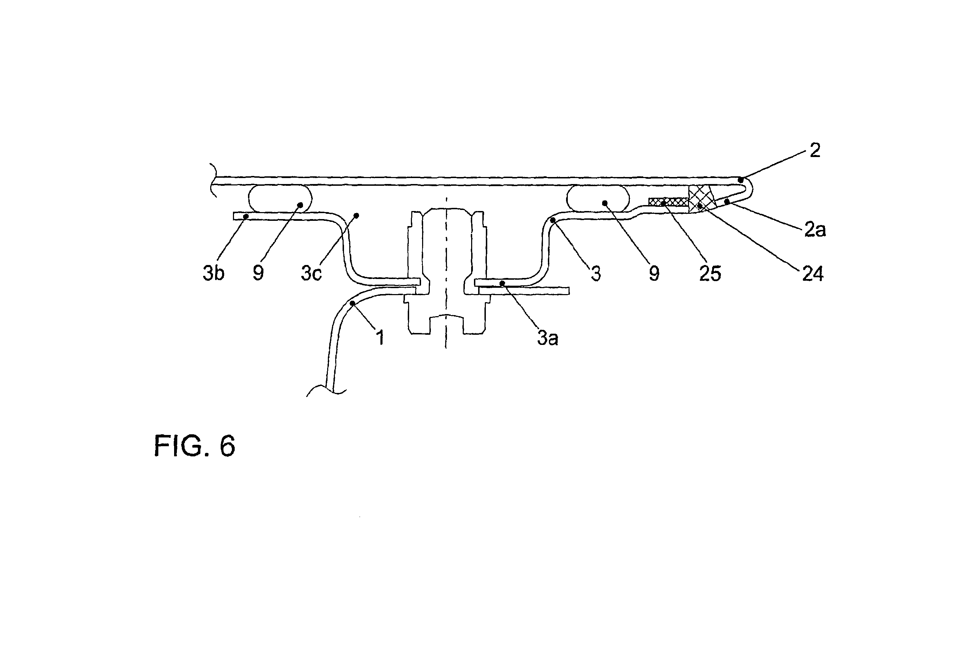

Nachfolgend wird unter Bezugnahme auf Fig. 6 eine alternative Variante der Erfindung näher erläutert. Fig. 6 zeigt eine Schnittansicht durch einen Ausschnitt einer Fahrzeugtür in einem Verfahrensstadium nach der Montage, wobei das Außenteil 2, welches insbesondere ein Außenblech einer Fahrzeugtür ist, über das leistenartige Verbindungsmittel 3 mit dem Innenteil 1 der Fahrzeugtür verbunden wurde. Anders als in dem zuvor beschriebenen Ausführungsbeispiel dient hier eine Metallverbindungsleiste 3 als Verbindungsmittel anstelle einer Hybridleiste. Durch eine als Befestigungselement dienende Schraube mit Mutter ist das Innenteil 1 mit dem als Leiste ausgebildeten Verbindungsmittel 3 verbunden. Diese Anordnung aus Innenteil 1 und Verbindungsmittel 3 wurde dann über die Klebstoffraupen 9 mit dem Außenteil (Außenblech)-2 verbunden. Man erkennt, dass das Außenteil 2 der Fahrzeugtür eine einseitige Umbiegung 2a aufweist. Das als Leiste ausgebildete Verbindungsmittel 3 ist in sich verkröpft und hat etwa die Form einer Hutschiene. Durch diese Form ergibt sich eine erste Ebene 3a des Verbindungsmittels, welche an einer Fläche des Innenteils 1 anliegt. Etwa parallel dazu und versetzt zu dieser ersten Ebene 3a weist das Verbindungsmittel eine zweite Ebene 3b an beiden Seiten auf, welche jeweils dem hier flächigen Außenteil 2 zugewandt ist und über die Klebstoffraupe 9 mit diesem verklebt wird. Das Befestigungselement 16, welches das Innenteil 1 und die eine Ebene 3a des Verbindungsmittels durchdringt, ragt in den Hohlraum 3c zwischen dem hutschienenartigen Profil des leistenförmigen Verbindungsmittels 3 und dem Außenteil 2.

Zwischen der Umbiegung 2a und dem dieser zugewandten Ende des Verbindungsmittels 3 verbleibt ein Spalt, welcher durch eine dort anzubringende Feinnahtabdichtung 24 verschließbar ist, so dass sich eine ansprechende geschlossene Optik ergibt, insbesondere wenn das Verbindungsmittel 3 in der Farbe des Fahrzeugs ausgeführt ist. An der dem Außenteil 2 zugewandten Seite des Verbindungsmittels 3 kann im Bereich der der Feinabdichtungsnaht 24 zugewandten Kante des Verbindungsmittels 3 ein Anschlag 25 vorgesehen sein.

### BEZUGSZEICHENLISTE

- 1: Innenteil
- 2: Außenteil
- 2a: Umbiegung
- 3: Verbindungsmittel
- 3a: erste Ebene
- 3b: zweite Ebene
- 3c: Hohlraum
- 4: Aufnahmevorrichtung
- 5: Aufnahmefläche
- 6: X-Anschlag
- 7: Z-Anschlag
- 8: Bolzen
- 9: Klebstoffraupe
- 10: Halterung
- 11: Positionierroboter
- 12: Aufnahme für 8
- 13,16: Befestigungselement
- 14: Schutzfolie
- 15: Klebeauftragsflächen
- 17: Vierkantmutter
- 18: Anformung
- 19: Abdeckleiste
- 20,21: Bolzen
- 22,23: Löcher
- 24: Feinnahtabdichtung
- 25: Anschlag

## Patentansprüche

1. Verfahren zur Herstellung einer Tür eines Kraftfahrzeugs umfassend mindestens ein Innenteil (1) und mindestens ein Außenteil (2), welche in mindestens einem Verfahrensschritt miteinander verbunden werden, wobei zunächst vor der Verbindung von Innenteil (1) und Außenteil (2) mindestens ein von diesen separates Verbindungsmittel (3) mit dem Innenteil (1) durch mindestens ein Befestigungselement (16) verbunden wird, wobei in mindestens einem Verfahrensschritt das bereits mit dem Innenteil (1) verbundene Verbindungsmittel (3) mit dem Außenteil (2) zur Verbindung von Innenteil (1) mit Außenteil (2) verbunden, vorzugsweise verklebt wird, **dadurch gekennzeichnet, dass** die Verbindung zwischen Innenteil (1) und Verbindungsmittel (3) über das mindestens eine Befestigungselement (16) derart ausgebildet ist, dass durch Lösen dieser Verbindung Außenteil (2) und Innenteil (1) problemlos zerstörungsfrei voneinander lösbar sind.

2. Verfahren nach Anspruch 1, **dadurch gekennzeichnet, dass** das mindestens eine Befestigungselement (16) zur Verbindung des Innenteils (1) mit dem Verbindungsmittel (3) das mindestens eine Verbindungsmittel (3) und das Innenteil (1) zumindest teilweise durchdringt.

3. Verfahren nach einem der Ansprüche 1 oder 2, **dadurch gekennzeichnet, dass** das mindestens eine Befestigungselement (16) als Schraube, Niet, Bolzen, Splint oder Spreizelement ausgeführt ist.

4. Verfahren nach einem der Ansprüche 1 bis 3, **dadurch gekennzeichnet, dass** während der Verklebung des Verbindungsmittels (3) mit dem Außenteil (2) das Innenteil (1) mit dem Außenteil (2) über mindestens ein zusätzliches Befestigungselement (13) direkt verbunden wird.

5. Verfahren nach Anspruch 4, **dadurch gekennzeichnet, dass** das zusätzliche Befestigungselement (13), mit dem das Innenteil (1) mit dem Außenteil (2) direkt verbunden wird, als Schraube, Niet, Bolzen, Splint oder Spreizelement ausgeführt ist.

6. Verfahren nach einem der Ansprüche 1 bis 5, **dadurch gekennzeichnet, dass** das Innenteil (1) vor der Verbindung mit dem Außenteil (2) mit mindestens einem Bauteil, insbesondere mit einem Fensterheber und/oder einem Türöffner und/oder einem Lautsprecher versehen wird.

7. Verfahren nach einem der Ansprüche 1 bis 6, **dadurch gekennzeichnet, dass** das Außenteil (2) vor der Verbindung mit dem Innenteil (1) auf seiner Außenseite mit einer Farblackierung und insbesondere mit einer die Farblackierung abdeckenden Schutzfolie (14) versehen wird.

8. Verfahren nach einem der vorhergehenden Ansprüche, **dadurch gekennzeichnet, dass** das mindestens eine Verbindungsmittel (3) als Leiste ausgeführt ist.

9. Verfahren nach Anspruch 8, **dadurch gekennzeichnet, dass** das mindestens eine Verbindungsmittel (3) aus Kunststoff und/oder Metall besteht, insbesondere als aus Kunststoff und Metall bestehende Hybridleiste ausgeführt ist.

10. Verfahren nach einem der Ansprüche 1 bis 9, **dadurch gekennzeichnet, dass** das mindestens eine Verbindungsmittel (3) auf seiner im verbundenen Zustand der Tür dem Außenteil (2) zugewandten Seite mindestens eine Klebeauftragsfläche (15) aufweist.

11. Verfahren nach einem der Ansprüche 8 bis 10, **dadurch gekennzeichnet, dass** das Verbindungsmittel (3) mindestens abschnittsweise einen einem U-Profil ähnlichen und/oder Hutprofil ähnlichen Querschnitt aufweist.

12. Verfahren nach einem der Ansprüche 8 bis 11, **dadurch gekennzeichnet, dass** als Verbindungsmittel (3) eine mindestens eine Verkröpfung aufweisende Leiste dient, umfassend zwei im Wesentlichen zueinander parallele Ebenen, wobei die erste Ebene (3a) mindestens teilweise an dem mit dem Verbindungsmittel (3) zu verbindenden Innenteil (1) zur Anlage kommt und die zweite Ebene (3b) mit dem Außenteil (2) verklebt wird.

13. Verfahren nach einem der Ansprüche 1 bis 12, **dadurch gekennzeichnet, dass** das Verbindungsmittel (3) mit dem unlackierten Innenteil verbunden und danach gemeinsam mit diesem wenigstens eine Beschichtung und/oder Lackierung erhält und danach die Verbindung dieser Anordnung, insbesondere die Verklebung mit dem Außenteil (2) erfolgt.

14. Verfahren nach einem der Ansprüche 1 bis 13, **dadurch gekennzeichnet, dass** in mindestens einem Bereich, in dem Innenteil (1) und Außenteil (2) aneinandergrenzen eine einen Spalt zwischen diesen ausfüllende Feinabdichtungsnaht angebracht wird.

15. Tür eines Kraftfahrzeugs, **dadurch gekennzeichnet, dass** diese in einem Verfahren gemäß einem der Ansprüche 1 bis 14 hergestellt wurde.

16. Kraftfahrzeug umfassend mindestens eine Tür gemäß Anspruch 15.

## Claims

1. Method for the production of a door of a motor vehicle, comprising at least one inner part (1) and at last one outer part (2), which are connected to one another in at least one step of the method, at least one connector (3) separate from the inner part (1) and the outer part (2) first being connected to the inner part (1) by means of a fastener (16) before connection of the inner part (1) and the outer part (2), the connector (3) already connected to the inner part (1) in at least one step of the method being connected, preferably bonded, to the outer part (2) in order to connect the inner part (1) to the outer part (2), **characterized in that** the connection between the inner part (1) and the connector (3) by way of the at least one fastener (16) is designed in such a way that the outer part (2) and the inner part (1) can be readily and non-destructively detached from one another by releasing this connection.

2. Method according to Claim 1, **characterized in that** the at least one fastener (16) passes at least partially through the at least one connector (3) and the inner part (1) in order to connect the inner part (1) to the connector (3).

3. Method according to Claim 1 or 2, **characterized in that** the at least one fastener (16) takes the form of a screw, rivet, bolt, split pin or expansion element.

4. Method according to any one of Claims 1 to 3, **characterized in that** during bonding of the connector (3) to the outer part (2) the inner part (1) is connected directly to the outer part (2) by way of at least one additional fastener (13).

5. Method according to Claim 4, **characterized in that** the additional fastener (13), by means of which the inner part (1) is connected directly to the outer part (2), takes the form of a screw, rivet, bolt, split pin or expansion element.

6. Method according to any one of Claims 1 to 5, **characterized in that** before connection to the outer part (2) the inner part (1) is provided with at least one component, in particular with a window lifter and/or a door opener and/or a loudspeaker.

7. Method according to any one of Claims 1 to 6, **characterized in that** before connection to the inner part (1) the outer part (2) is provided on the outside thereof with a paintwork and in particular with a protective film (14) covering the paintwork.

8. Method according to any one of the preceding claims, **characterized in that** the at least one connector (3) takes the form of a strip.

9. Method according to Claim 8, **characterized in that** the at least one connector (3) is composed of plastics and/or metal, and in particular takes the form of a hybrid strip composed of plastics and metal.

10. Method according to any one of Claims 1 to 9, **characterized in that** the at least one connector (3) has at least one adhesive application surface (15) on the side thereof which faces the outer part (2) when the door is assembled.

11. Method according to any one of Claims 8 to 10, **characterized in that** the connector (3), at least in sections, has a cross section similar to a U-shaped profile and/or a hat section profile.

12. Method according to any one of Claims 8 to 11, **characterized in that** a strip having at least one offset serves as connector (3), comprising two planes basically parallel to one another, the first plane (3a) coming to rest at least partially against the inner part (1) to be connected to the connector (3) and the second plane (3b) being bonded to the outer part (2).

13. Method according to any one of Claims 1 to 12, **characterized in that** the connector (3) is connected to the unpainted inner part and then together with the latter is given at least one coating and/or layer of paint before connecting this arrangement, in particular before bonding it, to the outer part (2).

14. Method according to any one of Claims 1 to 13, **characterized in that** a fine sealing seam filling a gap between the inner part (1) and the outer part (2) is applied in at least one area in which they adjoin one another.

15. Door of a motor vehicle, **characterized in that** it has been produced by a method according to any one of Claims 1 to 14.

16. Motor vehicle comprising at least one door according to Claim 15.

## Revendications

1. Procédé de fabrication d'une portière d'un véhicule automobile, comprenant au moins une partie intérieure (1) et au moins une partie extérieure (2), que l'on assemble dans au moins une étape de procédé, en assemblant, avant l'assemblage de la partie intérieure (1) avec la partie extérieure (2) au moins un moyen d'assemblage (3) séparé de ces dernières avec la partie intérieure (1) par au moins un élément de fixation (16), et, dans au moins une étape de procédé, en assemblant, de préférence en collant avec la partie extérieure (2) le moyen d'assemblage (3) d'ores et déjà assemblé avec la partie intérieure (1) pour l'assemblage de la partie intérieure (1) avec la partie extérieure (2), **caractérisé en ce que** l'assemblage entre la partie intérieure (1) et le moyen d'assemblage (3) par l'intermédiaire du au moins un élément de fixation (16) est conçu de façon telle que, par désolidarisation de cet assemblage, il soit possible de désolidariser sans problème et sans les détruire la partie extérieure (2) de la partie intérieure (1).

2. Procédé selon la revendication 1, **caractérisé en ce que** pour l'assemblage de la partie intérieure (1) avec le moyen d'assemblage (3), le au moins un élément de fixation (16) traverse au moins partiellement le au moins un moyen d'assemblage (3) et la partie intérieure (1).

3. Procédé selon l'une quelconque des revendications 1 ou 2, **caractérisé en ce que** le au moins un élément de fixation (16) est réalisé sous la forme d'une vis, d'un rivet, d'un boulon, d'une goupille de retenue ou d'un élément à expansion.

4. Procédé selon l'une quelconque des revendications 1 à 3, **caractérisé en ce que** pendant le collage du moyen d'assemblage (3) avec la partie extérieure (2), on assemble directement la partie intérieure (1) avec la partie extérieure (2,) par l'intermédiaire d'au moins un élément de fixation supplémentaire (13).

5. Procédé selon la revendication 4, **caractérisé en ce que** l'élément de fixation supplémentaire (13) avec lequel on assemble directement la partie intérieure (1) avec la partie extérieure (2) est réalisé sous la forme d'une vis, d'un rivet, d'un boulon, d'une goupille de retenue ou d'un élément à expansion.

6. Procédé selon l'une quelconque des revendications 1 à 5, **caractérisé en ce que**, avant l'assemblage avec la partie extérieure (2), on munit la partie intérieure (1) avec au moins un élément constitutif, notamment avec un lève-vitre et/ou avec un ouvre-porte et/ou avec un haut-parleur.

7. Procédé selon l'une quelconque des revendications 1 à 6, **caractérisé en ce que**, avant l'assemblage avec la partie intérieure (1), on munit la partie extérieure (2) sur sa face extérieure d'une peinture et notamment d'un film protecteur (14) recouvrant la peinture.

8. Procédé selon l'une quelconque des revendications précédentes, **caractérisé en ce que** le au moins un moyen d'assemblage (3) est réalisé sous la forme d'une baguette.

9. Procédé selon la revendication 8, **caractérisé en ce que** le au moins un moyen d'assemblage (3) est en matière plastique et/ou en métal, notamment **en ce qu'**il est réalisé en tant que baguette hybride en matière plastique ou en métal.

10. Procédé selon l'une quelconque des revendications 1 à 9, **caractérisé en ce que**, sur sa face dirigée vers la partie extérieure (2) lorsque la portière est assemblée, le au moins un moyen d'assemblage (3) comporte au moins une surface d'application de colle (15).

11. Procédé selon l'une quelconque des revendications 8 à 10, **caractérisé en ce que** le moyen d'assemblage (3) comporte au moins par tronçon une section transversale analogue à un profilé en U et/ou analogue à un profilé chape.

12. Procédé selon l'une quelconque des revendications 8 à 11, **caractérisé en ce qu'**une baguette comportant au moins un coudage, comprenant deux plans sensiblement parallèles, le premier plan (3a) venant s'appliquer au moins partiellement sur la partie intérieure (1) qui doit être assemblée avec le moyen d'assemblage (3), et le deuxième plan (3b) étant collé sur la partie extérieure (2), sert de moyen d'assemblage (3).

13. Procédé selon l'une quelconque des revendications 1 à 12, **caractérisé en ce qu'**on assemble le moyen d'assemblage (3) avec la partie intérieure non peinte et qu'il reçoit ensuite, ensemble avec cette dernière au moins un revêtement et/ou une peinture et qu'on procède ensuite à l'assemblage de cet agencement, notamment au collage avec la partie extérieure (2).

14. Procédé selon l'une quelconque des revendications 1 à 13, **caractérisé en ce que** dans au moins une zone dans laquelle la partie intérieure (1) et la partie extérieure (2) sont adjacentes, on applique une soudure d'étanchéité fine remplissant un interstice entre ces dernières.

15. Portière d'un véhicule automobile, **caractérisée en ce qu'**elle a été fabriquée par un procédé selon l'une quelconque des revendications 1 à 14.

16. Véhicule automobile comprenant au moins une portière selon la revendication 15.
